Europäisches Patentamt

European Patent Office

Office européen des brevets

(11) Veröffentlichungsnummer: **0 344 122**
**A1**

## (12) EUROPÄISCHE PATENTANMELDUNG

(21) Anmeldenummer: 89810381.7

(22) Anmeldetag: 23.05.89

(51) Int. Cl.⁴: **F 16 K 11/07**
**F 16 K 3/34, F 15 B 13/04**

(30) Priorität: 27.05.88 CH 2019/88

(43) Veröffentlichungstag der Anmeldung:
**29.11.89 Patentblatt 89/48**

(84) Benannte Vertragsstaaten: **CH DE FR GB LI**

(71) Anmelder: **SIG Schweizerische Industrie-Gesellschaft**
**CH-8212 Neuhausen am Rheinfall (CH)**

(72) Erfinder: **Huber, Reinhold**
**Langrietstrasse 10**
**CH-8212 Neuhausen am Rheinfall (CH)**

(74) Vertreter: **Münch, Otto et al**
**Patentanwalts-Bureau Isler AG Postfach 6940**
**CH-8023 Zürich (CH)**

(54) **Mehrkanten-Fühlerventil.**

(57) In einer zylindrischen Bohrung (6) des Gehäuses (1) des Fühlerventils sind zwei koaxiale Steuerbüchsen (18) eingesetzt und durch eine Feder (19) gegeneinander verspannt. Die eine Büchse liegt gegen einen gehäusefesten Anschlag (7) an. Die andere ist durch eine Einstellschraube (20) axial verschiebbar. In den koaxialen Steuerbohrungen (23) der beiden Büchsen (18) ist je ein Steuerschieber (40) axial verschiebbar. Die Steuerbohrungen (23) haben Umfangsnuten (24, 25), die einen ersten Satz von Steuerkanten (32,33) bilden. Die Nut (24) ist mit einem Druckanschluss (2) und die Nut (25) mit einem Rücklaufanschluss (3) verbunden. Je eine Ausnehmung (45) der Steuerschieber (40) bildet einen zweiten Satz von Steuerkanten (49, 50). Die beiden Ausnehmungen (45) kommuniziern mit je einem Ausgangsanschluss (4,5). Durch die Verschiebbarkeit der Büchsen (18) gegeneinander wird die Herstellung des Fühlerventils vereinfacht. Den beiden Steuerkanten (49,50) sind zwei Hilfssteuerkanten (59,60) zugeordnet. Diese sind über eine Blende (64) mit dem betreffenden Ausgangsanschluss (4,5) verbunden. Dadurch wird in der Gegend der Neutralstellung eine hohe Druckverstärkung und eine geringe Durchflussverstärkung erreicht, so dass das Fühlerventil bei pneumatischen Anwendungen eine hohe statische Steifigkeit und gleichzeitig einen stabilen dynamischen Betrieb ermöglicht.

Fig. 1

**Beschreibung**

**Mehrkanten-Fühlerventil**

Die Erfindung betrifft ein Mehrkanten-Fühlerventil, wie es zum Beispiel aus der CH-PS 660 637 als Vierkanten-Fühlerventil bekannt ist. In einer Gehäusebohrung sind mehrere Umfangsnuten geschnitten. Diese bilden einen ersten Satz von Steuerkanten. In der Bohrung ist ein Steuerschieber axial verschiebbar. Der Steuerschieber hat ebenfalls Umfangsnuten, die einen zweiten Satz von Steuerkanten bilden. Bei der Auslenkung des Steuerschiebers öffnen zwei einander zugeordnete Steuerkanten der beiden Sätze einen Durchgang von einem Druckanschluss zu einem ersten Ausgangsanschluss. Gleichzeitig öffnen zwei weitere einander zugeordnete Steuerkanten einen weiteren Durchgang von einem zweiten Ausgangsanschluss zu einem Rücklauf. Ein an den beiden Ausgängen angeschlossenes Betätigungsglied, zum Beispiel ein Hydraulikzylinder, bewegt sich dann mit einer Geschwindigkeit entsprechend der Auslenkung des Steuerschiebers im Gehäuse. Dieser Aufbau eines Vierkanten-Fühlerventils, das auch als Servoventil oder Proportionalventil bezeichnet wird, ist allgemein bekannt.

Ein erstes Problem bei solchen Fühlerventilen besteht darin, dass die beiden Sätze von Steuerkanten genau aufeinander abgestimmt sein müssen. Dazu muss bei Vierkantenventilen der Steuerschieber mehrmals in sein Gehäuse eingebaut, hydraulisch bezüglich des Mitteldrucks und der gewünschten Ueberlappung ausgemessen, demontiert und entsprechend dem Messergebnis nachgearbeitet werden. Dies ist sehr aufwendig.

Ein erster Aspekt der Erfindung besteht darin den Aufwand zum Abstimmen der beiden Sätze von Steuerkanten zu vermindern. Diese Aufgabe wird durch die kennzeichnenden Merkmale des Anspruchs 1 gelöst.

Aus der DE-A-1 917 522 ist ein Zweikanten-Schieberventil mit einem Druckanschluss, einem Ausgangsanschluss und einem Rücklaufanschluss bekannt. Bei diesem bekannten Ventil kann die Ueberlappung dadurch eingestellt werden, dass der Abstand der beiden Steuerkanten des Schiebers einstellbar ist. Damit wird erreicht, dass bei Erosion der Schieberkanten diese nachgeschliffen und anschliessend wieder auf die ursprüngliche Ueberlappung nachgestellt werden können.

Ein weiteres Problem bei der beschriebenen Art von Mehrkanten-Fühlerventilen besteht darin, dass diese bei der Anwendung mit gasförmigen Druckmedien in einem geschlossenen Regelkreis entweder zu Eigenschwingungen neigen oder im stationären Zustand weich sind, das heisst dass das mit dem Ventil betätigte Abtriebsglied zu stark nachgibt, wenn darauf eine Kraft ausgeübt wird.

Ein zweiter Aspekt der vorliegenden Erfindung besteht darin, ein Mehrkanten-Fühlerventil derart auszubilden, dass es beim Betrieb mit einem gasförmigen Druckmedium sowohl eine hohe statische Steifigkeit als auch eine hinreichende Dynamik im Betrieb gewährleistet. Diese Aufgabe wird durch die kennzeichnenden Merkmale des Anspruchs 6 gelöst.

Nachfolgend wird ein Ausführungsbeispiel der Erfindung anhand der Zeichnung erläutert. Darin zeigt:

Fig. 1 einen Axialschnitt durch ein Vierkanten-Fühlerventil,

Fig. 2 einen Querschnitt längs der Linie II-II in Fig. 1,

Fig. 3 einen Querschnitt längs der Linie III-III in Fig. 1,

Fig. 4 eine Teilansicht des Steuerschiebers mit einer anderen Ausbildung der Steuerkanten, und

Fig. 5 bis 8 vier weitere Varianten des Steuerschiebers.

Das dargestellte Fühlerventil hat ein Gehäuse 1 mit einem Druckanschluss 2, einem Rücklaufanschluss 3 und zwei Ausgangsanschlüssen 4, 5 zum Anschluss eines zu betätigenden Gliedes, zum Beispiel eines Pneumatik- oder Hydaulikzylinders oder eines Strömungsmittel-Rotationsmotors. Das Gehäuse 1 hat eine axiale Bohrung 6. Die Bohrung 6 ist auf der einen Seite durch einen Ringflansch 7 abgeschlossen und auf der anderen Seite in eine Gewindebohrung 8 erweitert. In die Bohrung 6 münden radiale, mit den Anschlüssen 2 bis 5 kommunizierende Kanäle 9, 10, 11, 12, 13. In die Bohrung 6 sind zwei koaxiale, indentisch ausgebildete Steuerbüchsen 18 eingesetzt. Zwischen die Büchsen 18 ist eine vorgespannte Feder 19 eingespannt. Diese presst eine Büchse 18 gegen den Flansch 7 und die andere Büchse 18 gegen eine ins Gewinde 8 eingeschraubte Einstellschraube 20. Mit der Schraube 20 kann der gegenseitige Abstand der Büchsen 18 voneinander eingestellt werden. Die Büchsen 18 haben aussen Umfangnuten 21, 22, die auf die Kanäle 9, 12 bzw. 10, 13 ausge richtet sind. Koaxial zur äusseren Mantelfläche haben die Büchsen 18 eine Steuerbohrung 23 mit zwei weiteren Umfangsnuten 24, 25. Die Nut 24 ist über radiale Bohrungen 26 mit der Nut 21 und damit über die Kanäle 9 bzw. 10 mit dem Druckanschluss 2 verbunden. Von der Nut 25 führen radiale Bohrungen 27 in den Raum 28 zwischen den beiden Büchsen 18. Der Raum 28 ist über dem Kanal 11 mit dem Rücklaufanschluss 3 verbunden. Von der mit einem der Ausgangsanschlüsse 4, 5 kommunizierenden Nut 22 führen radiale Bohrungen 29 annähernd mittig in die Steuerbohrung 23. Die beiden einander benachbarten radialen Stirnflächen 30, 31 der Nuten 24, 25 bilden zusammen mit der Steuerbohrung 23 einen ersten Satz von Steuerkanten 32, 33.

In jeder der beiden Büchsen 18 ist ein Steuerschieber 40 verschiebbar. Die beiden Steuerschieber 40 sind ebenfalls identisch ausgebildet und stossen mit einer bombierten Stirnfläche aneinander. Sie werden durch eine vorgespannte, sich an der Einstellschraube 20 abstützende Feder 41 zusammengepresst und zur Anlage gegen ein bloss angedeutetes Betätigungsglied 42 gedrückt. Das Betätigungsglied 42 kann zum Beispiel aus einem Schrittmotor 43 und einem Zahnrad- oder Schraubgetriebe 44 bestehen. Die beiden Steuerschieber 40 folgen der axialen Bewegung des Betätigungsgliedes 42. Jeder Steuerschieber 40 hat zwei symetrisch zu einer die Längsachse enthaltenden Ebene ausgebildete Ausnehmungen 45. Die axialen Enden dieser Ausnehmungen 45 werden gebildet durch abgestufte Einfräsungen 46, 47. Diese Einfräsungen 46, 47 bilden zusammen mit der zylindrischen Umfangsfläche 48 einen zweiten Satz von Steuerkanten 49, 50.

Dieser zweite Satz von Steuerkanten 49, 50 ist gegenüber dem ersten Satz 32, 33 überlappend ausgebildet, das heisst dass der grösste axiale Abstand der Steuerkanten 49, 50 voneinander geringer ist als der Abstand der Steuerkanten 32, 33 voneinander. Im Nulldurchgang ergeben daher die beiden Steuerkantensätze 32, 33 und 49, 50 eine sehr flache Kennlinie mit geringer Druckverstärkung. Zur Erhöhung der Druckverstärkung um die Neutralstellung haben die Steuerschieber 40 je zwei Sätze von zusätzlichen, eingefrästen Ausnehmungen 55, 56. Deren in Radialebenen liegende, voneinander entfernte Stirnflächen 57, 58 bilden zusammen mit der Umfangsfläche 48 Hilfssteuerkanten 59, 60. Die Hilfssteuerkanten 59, 60 haben annähernd den selben Abstand voneinander, wie die Steuerkanten 32, 33 des ersten Satzes. Die Ausnehmungen 55, 56 sind über je eine radiale Bohrung 61 und eine gemeinsame axiale Bohrung 62 miteinander verbunden. Eine radiale Gewindebohrung 63 führt von der Bohrung 62 zur Ausnehmung 45. In die Gewindebohrung 63 ist eine Blende 64 eingeschraubt.

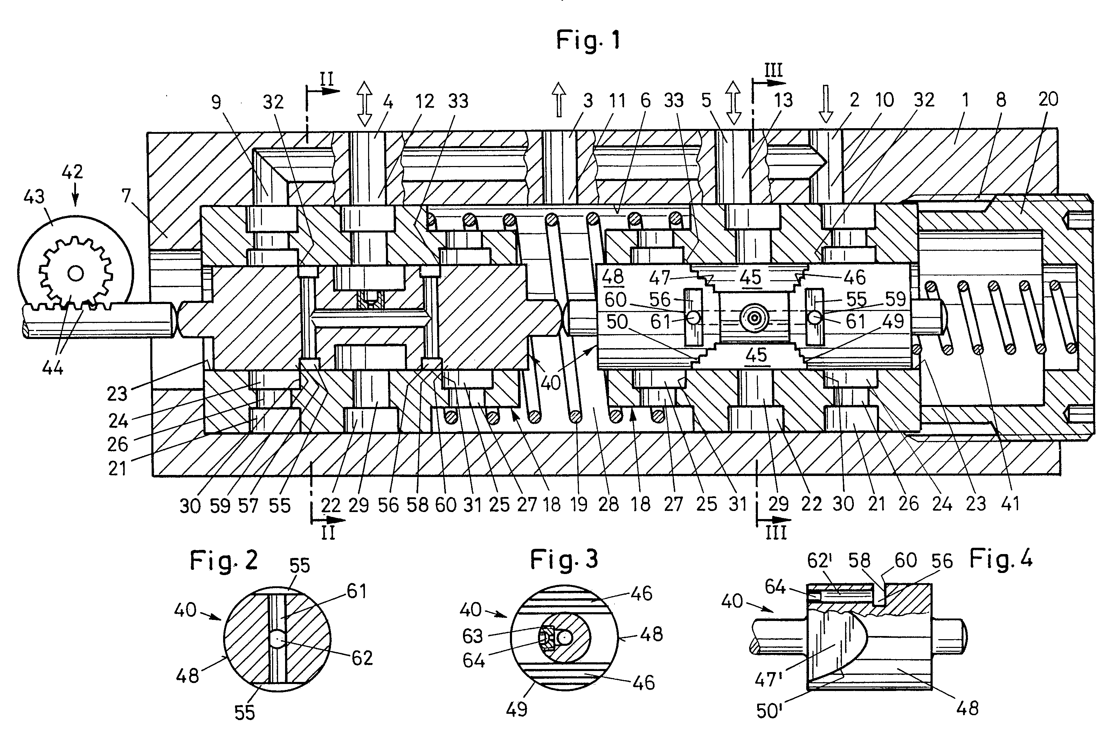

Im Betrieb arbeitet das beschriebene Fühlerventil wie folgt: Werden die beiden Steuerschieber 40 aus der in Fig. 1 dargestellten Neutralstellung durch das Betätigungsglied 42 geringfügig nach rechts verschoben, so öffnet die Hilfssteuerkante 59 des rechten Steuerschiebers 40 relativ zur Steuerkante 32 der rechten Büchse 18 eine Steueröffnung, während gleichzeitig der Durchfluss zwischen der Hilfssteuerkante 60 des rechten Steuerschiebers 40 und der zugehörigen Steuerkante 33 gegenüber dem Durchfluss in der Neutralstellung reduziert wird. Dementsprechend steigt der Druck im Ausgangsanschluss 5 an. Das umgekehrte geschieht bei der gleichzeitigen Verschiebung des linken Steuerschiebers 40 in der linken Büchse 18, so dass der Druck im Ausgangsanschluss 4 sinkt. Wegen der Null- oder negativen Ueberlappung der Hilfssteuerkanten 59, 60 mit den Steuerkanten 32, 33 ist dabei die Druckverstärkung, das heisst dass Verhältnis des Druckunterschiedes zwischen den Ausgängen 4, 5 zum Hub des Steuerschiebers 40 sehr hoch. Durch die Blende 64 wird jedoch der Durchfluss auf kleine Werte beschränkt. Die Hilfssteuerkanten 59, 60 verleihen also dem mit dem Fühlerventil angesteuerten Glied, z.B. einem Pneumatikzylinder, eine hohe statische Steifigkeit, jedoch mit einer geringen Dynamik, so dass insbesondere bei Pneumatikanwendungen Stabilitätsprobleme vermieden werden können.

Für die Dynamik sind nämlich die Steuerkanten 49, 50 im Zusammenwirken mit den Steuerkanten 32, 33 verantwortlich. Werden die Steuerschieber 40 weiter nach rechts verschoben, so öffnet die Steuerkante 49 des rechten Steuerschiebers gegenüber der Steuerkante 32 der rechten Büchse 18 eine Steueröffnung. Dabei wird wegen der abgestuften Einfräsung 46 die in Umfangsrichtung gemessene Breite der Steuerkante 49 mit wachsender axialer Auslenkung des Steuerschiebers 40 grösser, das heisst die Fläche der Steueröffnung wächst mit der axialen Auslenkung des Steuerschiebers 40 progressiv. Dadurch können Eigenschwingungen bei Verwendung des Fühlerventils in geschlossenen Regelkreisen vermieden werden. Wie in Fig. 1 dargestellt ist, ist die Abstufung der druckanschlussseitigen Steuerkante 49 steiler als jene der rücklaufseitigen Steuerkante 50. Dadurch wird beim rechten Steuerschieber 40 bei der Auslenkung nach rechts die Steueröffnung zum Druckanschluss 2 weiter geöffnet, als gleichzeitig beim linken Steuerschieber 40 die Steueröffnung zum Rücklaufanschluss 3. Durch diese Ausbildung wird erreicht, dass bei der Auslenkung der Steuerschieber 40 der mittlere Druck zwischen den beiden Anschlüssen 4, 5 ansteigt. Dieser mittlere Druck ist einer der massgebenden Faktoren zur Bestimmung der Schwingungs-Eigenfrequenz des geschlossenen Regelkreises. Mit der beschriebenen Ausbildung wird diese Eingenfrequenz erhöht, was ebenfalls die Stabilität verbessert.

Die Kraft- und Flächenverhältnisse am Arbeits-Zylinder oder -Motor können bei der Auslegung der Steuerkanten 49, 50 mitberücksichtigt werden.

In der Neutralstellung kann der durch die Hilfssteuerkanten 59, 60 bestimmte mittlere Druck zwischen den Anschlüssen 4, 5 sehr einfach durch die Einstellschraube 20 eingestellt werden, indem die beiden Büchsen 18 relativ zueinander verschoben werden. Dadurch ist nicht nur eine Anpassung an den Anwendungsfall möglich, sonderen auch die Herstellung wird ganz erheblich vereinfacht. Mit der erfindungsgemässen Ausbildung des Fühlerventils wird das sehr aufwendige hydraulische Ausmessen des Mitteldruckes und das nachschleifen der Steuerkanten vollständig vermieden. Es brauchen nur noch jeweils zwei Steuer kanten miteinander gepaart zu werden, nämlich die Hilfssteuerkanten 59, 60 mit den Steuerkanten 32, 33.

In Fig. 4 ist eine Variante der Ausbildung des Steuerschiebers 40 dargestellt. Hier hat die Ausnehmung 45' ebene, gegenüber der Achsrichtung geneigte Flächen 47'. Die Flächen 47' bilden zusammen mit der Umfangsfläche 48 die Steuerkante 50' des zweiten Satzes. Die Ausnehmung 56 ist hier direkt über eine axiale Bohrung 62' mit der Ausnehmung 45' verbunden. In die Bohrung 62' ist die Blende 64 eingesetzt. Die schräge Fläche 47' hat gegenüber der abgestuften Fläche 47 der Ausführungsform nach Fig. 1 den Vorteil, dass der Oeffnungsquerschnitt stetig progressiv zunimmt. Die abgestufte Fläche 47 hat dafür den Vorteil, dass sie einfacher auszumessen und deshalb genauer herzustellen ist. Die direkte Verbindung der Ausnehmung 45' über die Bohrung 62' und die Blende 64 mit der Ausnehmung 45' ist vorallem für Anwendungen gedacht, bei welchen nur einer der beiden Steuerkanten 49, 50 des ersten Satzes, beispielsweise der druckanschlussseitigen Steuerkante 49, eine Hilfssteuerkante 59 zugeordnet ist. In diesem Fall werden die Ausgangsanschlüsse 4, 5 zusätzlich über eine weitere Drossel mit dem entgegengesetzten Anschluss, z.B. dem Rücklaufanschluss 3, verbunden.

Das Versetzen der geneigten Fläche 47' zur Ausnehmung 56 in Umfangsrichtung ergibt die Möglichkeit den Abstand der Steuerkanten 50 und 60 beliebig zu gestalten, und auch sehr klein zu halten.

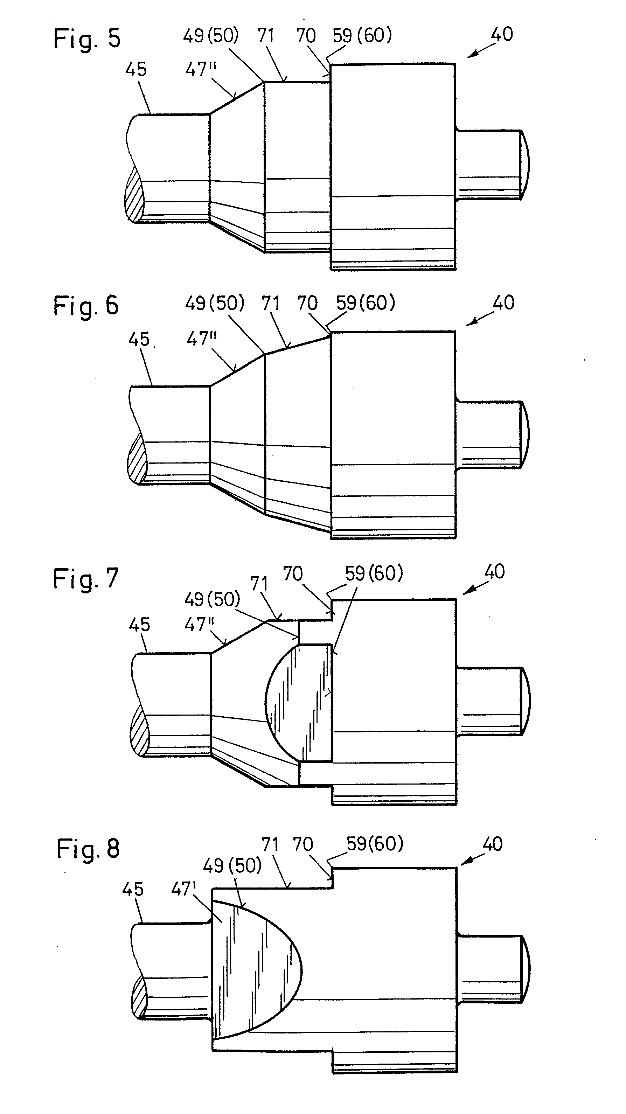

In den Figuren 5 bis 8 sind weitere Varianten der Ausbildung der Hilfssteuerkante dargestellt, die hier als flache Stufe 70 von etwa 0,03 bis 0,3 mm Höhe ausgebildet ist. Der besseren Darstellung wegen ist in Figuren 5 bis 8 die Stufenhöhe stark übertrieben dargestellt. Die Ausnehmungen 45 sind bei den Ausführungsformen nach Figuren 5 bis 7 Umfangsnuten und die Flächen 47'' konische Wände dieser Umfangsnuten. Der Oeffnungswinkel der konischen Flächen 47'' ist übertrieben gross dargestellt.

In Fig. 5 ist der Grund 71 der Stufe 70 kreiszylindrisch, in Fig. 6 leicht konisch, in Fig. 7 eben und entweder achsparallel oder leicht zur Achse des Schiebers 40 geneigt und in Fig. 8 ebenfalls eben. Bei der Ausführungsform nach Fig. 8 wird die Steuerkante 49, 50 wie bei der Ausführungsform nach Fig. 4 durch den Rand einer gegenüber der Achse geneigten Fläche 47' gebildet.

Die Wirkungsweise der Ausführungsformen nach Figuren 5 bis 8 ist die gleiche wie jene nach Figuren 1 bis 4, wobei die Funktion der Blende 64 gemäss Figuren 1 bis 4 bei den Ausführungsformen nach Figuren 5 bis 8 durch den Drosselspalt zwischen dem Grund 71 und der Bohrung 23 gebildet wird.


**Patentansprüche**

1. Vierkanten-Fühlerventil umfassend ein Gehäuse (1) mit einem Zufuhranschluss (2) für ein Druckmedium, einem Rücklauf (3) und zwei gesteuerten Ausgangsanschlüssen (4,5) zur Verbindung mit einem zu steuernden Glied, wobei in einer zylindrischen Steuerbohrung (23),die Ausnehmungen (24,25) mit einem ersten Satz von vier Steuerkanten (32,33) hat, ein Steuerschieber (40) mit einem zweiten Satz von vier Steuerkanten (49,50) verschiebbar ist, dadurch gekennzeichnet, dass einer der beiden Sätze von Steuerkanten (32,33;49,50) in zwei gegeneinander in Achsrichtung einstellbaren Körpern (18) ausgebildet ist, wobei beide Körper (18) je eine Zufuhrsteuerkante (32) und eine Rücklaufsteuerkante (33) haben.

2. Fühlerventil nach Anspruch 1, dadurch gekennzeichnet, dass in einer gemeinsamen Gehäusebohrung (6) zwei koaxiale Büchsen (18) eingesetzt sind, deren Durchgangsbohrungen die Steuerbohrung (23) bilden, und dass die axiale Lage der einen Büchse (18) relativ zur anderen einstellbar ist.

3. Fühlerventil nach Anspruch 2, dadurch gekennzeichnet, dass zwischen den beiden Büchsen (18) eine vorgespannte Druckfeder (19) eingesetzt ist, dass die eine Büchse (18) gegen einen gehäusefesten Anschlag (7) anliegt, und das die andere Büchse (18) an einem Einstellglied (20) anliegt.

4. Fühlerventil nach einem der Ansprüche 1 bis 3, dadurch gekennzeichnet, dass der Steuerschieber (40) aus zwei miteinander verbundenen, je zwei der Steuerkanten (49,50) des zweiten Satzes aufweisenden Teilen besteht.

5. Fühlerventil nach Anspruch 4, dadurch gekennzeichnet, dass die beiden Teile stirnseitig aneinander stossen und durch eine weitere Feder (41) aneinander gepresst sind.

6. Mehrkanten-Fühlerventil umfassend ein Gehäuse (1) mit einem Zufuhranschluss (2) für ein Druckmedium, einem Rücklauf (3) und mindestens einem gesteuerten Ausgangsanschluss (4,5) zur Verbindung mit einem zu steuernden Glied, wobei in einer zylindrischen Steuerbohrung (23), die Ausnehmungen (24,25) mit einem ersten Satz von Steuerkanten (32,33) hat, ein Steuerschieber (40) mit einem zweiten Satz von Steuerkanten (49,50) verschiebbar ist, dadurch gekennzeichnet, dass bei einem der beiden Sätze von Steuerkanten (32,33;49,50) mindestens einer dieser Steuerkanten eine axial versetzt angeordnete Hilfssteuerkante (59,60) zugeordnet ist, die durch eine weitere Ausnehmung (55,56;70) gebildet ist, und dass die weitere Ausnehmung (55,56;70) über eine Drossel (64,71) mit dem Ausgangsanschluss (4,5) verbunden ist, wobei der erste Satz von Steuerkanten (32,33) den zweiten Satz von Steuerkanten (49,50) in der Neutralstellung des Steuerschiebers (40) überlappt.

7. Fühlerventil nach Anspruch 6, dadurch gekennzeichnet, dass die Hilfssteuerkante (59,60) gegenüber der im gleichen Bauteil (40) angeordneten zugehörigen Steuerkante (49,50) in Umfangsrichtung versetzt ist.

8. Fühlerventil nach Anspruch 6 oder 7, dadurch gekennzeichnet, dass sich die Steuerkanten (49,50) eines der beiden Sätze von Steuerkanten (32,33;49,50) in Achsrichtung und in Umfangsrichtung erstrecken.

9. Fühlerventil nach einem der Ansprüche 6 bis 8, dadurch gekennzeichnet, dass die weitere Ausnehmung (70) eine flache Stufe am Umfang des Steuerschiebers (40) ist, deren Stirnende die Hilfssteuerkante (50,60) bildet, und deren Grund (71) zusammen mit der Steuerbohrung (23) die Drossel bildet.

10. Fühlerventil nach einem der Ansprüche 6 bis 9, dadurch gekennzeichnet, dass die Kennlinien der Oeffnungsquerschnitte über der achsialen Auslenkung der Steuerkanten (49,50) ungleich sind.

Fig. 1

Fig. 2

Fig. 3

Fig. 4

Fig. 5

45    47"    49 (50)    71    70    59 (60)    40

Fig. 6

45    47"    49 (50)    71    70    59 (60)    40

Fig. 7

45    47"    49 (50)    71    70    59 (60)    40

Fig. 8

45    47'    49 (50)    71    70    59 (60)    40

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 226 809 (R. BOSCH GmbH) <br> * Seite 12, Absatz 2 * <br> --- | 1 | F 16 K 11/07 <br> F 16 K 3/34 <br> F 15 B 13/04 |
| D,Y | DE-A-1 917 522 (DOWTY HYDRAULIC UNITS LTD) <br> * Anspruch 1 * <br> --- | 1 | |
| A | GB-A-1 155 740 (ZAVODY PRUMYSLOVE AUTOMATISALE JINONICE) <br> --- | | |
| A | US-A-3 596 871 (DUPAR DYNAMICS) <br> --- | | |
| A | FR-A-2 368 656 (STAL-LAVAL TURBIN AB) <br> ----- | | |

RECHERCHIERTE SACHGEBIETE (Int. Cl.4)

F 16 K 11/00
F 16 K 3/00
F 15 B 13/00
F 04 B 1/00
F 16 K 27/00

Der vorliegende Recherchenbericht wurde für alle Patentansprüche erstellt

| Recherchenort | Abschlußdatum der Recherche | Prüfer |
|---|---|---|
| DEN HAAG | 16-08-1989 | DE SMET F.P. |

EPO FORM 1503 03.82 (P0403)